Europäisches Patentamt

European Patent Office

Office européen des brevets

(11) Publication number: **0 198 955**
**A1**

## (12) EUROPEAN PATENT APPLICATION

(21) Application number: **85115615.8**

(22) Date of filing: **09.12.85**

(51) Int. Cl.⁴: **G 01 B 9/04**

(30) Priority: **22.03.85 JP 59161/85**

(43) Date of publication of application:
**29.10.86 Bulletin 86/44**

(84) Designated Contracting States:
**DE FR GB**

(71) Applicant: **Dainippon Screen Mfg. Co., Ltd.**
**1-1, Tenjinkitamachi Teranouchi-agaru 4-chome**
**Horikawa-dori**
**Kamikyo-ku Kyoto-shi Kyoto-fu(JP)**

(72) Inventor: **Kikkawa, Atsushi**
**52-9 Kasuga-cho**
**Takatsuki Osaka(JP)**

(72) Inventor: **Kondo, Noriyuki**
**1-504, 3-chome 6 Nishisakaidani-cho Oharano**
**Nishikyo-ku Kyoto(JP)**

(72) Inventor: **Tamada, Atsushi**
**111 Getso-cho Saiin**
**Ukyo-ku Kyoto(JP)**

(74) Representative: **Goddar, Heinz J., Dr. et al,**
**FORRESTER & BOEHMERT Widenmayerstrasse 4/1**
**D-8000 München 22(DE)**

(54) Apparatus for and a method of measuring the width of a line.

(57) Apparatus and a method for measuring the width of a line on a pattern on a specimen, in particular a mask or wafer for use in the production of integrated circuits are described. The apparatus comprises: photosensitive means comprising an array (13) of photosensitive elements for each providing a signal representing the light received thereby; an optical system (10, 11) for projecting a magnified image of the specimen (2) onto the array and signal processing means (20) for processing the signals output from the array to determine the width of a line on the specimen. The array may be movable relative to the specimen in units of distance less than the inter-element pitch of the array to enhance the precision of the measurement.

Fig. 3

Apparatus for and a method of measuring the width of a line

THIS INVENTION relates to apparatus for and a method of measuring the width of a line. In particular this invention relates to apparatus for and a method of measuring the width of a line of an extremely fine pattern formed on a mask or wafer of the kind used in integrated circuits.

A fine pattern typically is formed on a generally very thin film on silicon, e.g., a silicon oxide or photo resist film over silicon, and the quality of the integrated circuit (IC) depends on the precision of the pattern's film thickness and the pattern line widths.

Hence for satisfactory production control of ICs a device for line width measurement is required. Currently available devices for this purpose typically utilize a photoelectrically produced photo image of the pattern of interest. The pattern is formed on a thin film, hence for accurate detection of a pattern edge for determining the line width it is necessary to discriminate accurately between minute differences in light intensity. With such a line width measuring device therefore, its performance is determined by how accurately it is possible to detect a pattern edge from minute photo-intensity differences between photo images obtained from the pattern.

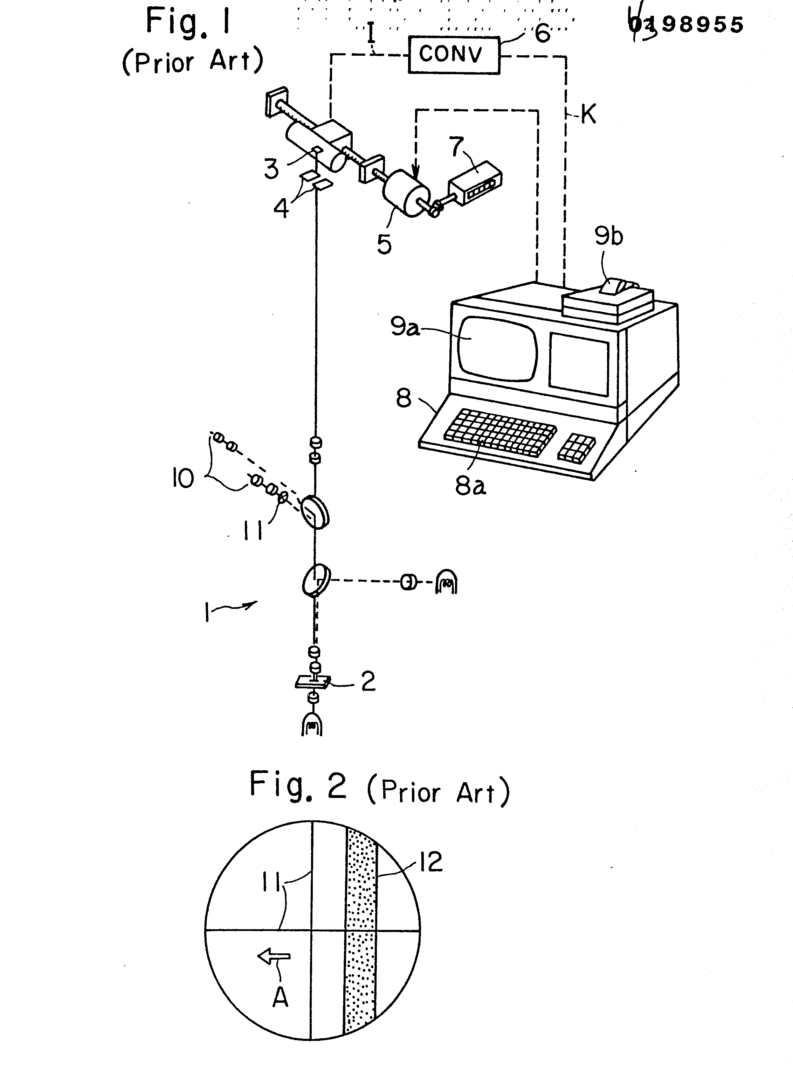

A previously proposed line width measuring device of this type uses a photoelectric microscope, as shown in Figure 1 of the accompanying drawings. As shown in Figure 1, 1 designates a microscope, 2 a specimen in the form of a mask or wafer set on the microscope, 3 a photo-electric conversion element and 4 a slit, the conversion element 3 and slit 4 being movable synchronously to scan the mask or wafer. Element 6 is a current-voltage converter comprising an amplifier, and 7 is digital counter. Signal processing means 8, e.g. a microcomputer, which also controls a stepper motor 5, computes a photo-intensity signal received from the current-voltage converter 6, computes the line width, and outputs the result either to a display 9a or to a printer 9b. 8a is a keyboard to control the various operations.

A line width measuring device so using a photo-electric microscope measures the pattern's line width as follows:

The specimen 2 that is to be measured is first put on the specimen mount of the microscope 1. Looking through the binocular eyepiece 10, the user then moves pattern 12 in the direction indicated by the arrow to a position, for example, on the righthand side of the vertical line of the microsope's cross-hairs 11 (see Figure 2). Signal processing means 8 is then started. Slit 4 and photo-electric conversion element 3 are moved synchronously and intermittently in one direction by the stepper motor 5 under the control of the signal processing means 8 so that an image signal I of the pattern 12 is output stepwise and is amplified by current-voltage converter 6 to form a photo-intensity signal K. The photo-intensity signal K is compared with a predetermined reference level signal in the signal processing means 8 to enable the line width of the pattern 12 to be computed by the signal processing means and the result is displayed or printed in units of 0.05 μm.

It is also possible to use an image pick-up tube instead of the combination of the slit and the photo-electric conversion element. In this case, however, the distortion of the image displayed on the tube must be less than 0.2%, hence compensation of the distortion, improvement of stability, etc., will be necessary in practical use. In yet another method the scanning of the specimen's surface is done with a fine laser beam for detecting the scattering of rays due to pattern edges to thereby measure the line width.

In the above-mentioned prior art, involving scanning of the specimen's surface by a combination of a slit and a photo-electric conversion element, the image signal is output stepwise during scanning. Hence shortening of the measuring time is not feasible, particularly when a plurality of scans must be made for improved precision. As to the prior art in which the specimen's surface is scanned by the laser beam, the laser beam scanning optical system becomes complicated and limits the productivity of such device while resulting in increased production costs.

A need, therefore, exists for a simple, inexpensive and precise apparatus and method for measuring line width in very fine patterns.

It is an object of the present invention to overcome or at least mitigate the above-mentioned disadvantages.

According to one aspect of the present invention, there is provided apparatus for measuring the width of a line on a pattern on a specimen, the apparatus comprising: photosensitive means comprising an array of photosensitive elements for each providing a signal representing light received thereby; means for projecting a magnified image of a line on a specimen onto the array; and means for processing signals output by the photosensitive elements of the array to determine the width of the line. Conveniently, the array is a one dimensional array.

Preferably, the photosensitive means further comprises a parallel-to-serial converter for converting signals output in parallel by the photosensitive means into series signals.

Generally, the photosensitive means outputs analogue signals and an analogue-to-digital converter is provided for converting the analogue signals into digital signals for supply to the signal processing means.

In another aspect, the present invention provides apparatus for measuring the line width of a line in a pattern on a specimen, the apparatus comprising: a magnifying optical system through which the line pattern of the specimen to be examined is projected under predetermined magnification; a photo-electric conversion means for converting the image of the pattern projected under magnification, the photo-electric conversion means comprising a one dimensional image sensor array and a P/S conversion circuit for outputting serial output signals; an A/D converter for A/D converting of the signals output by the said photo-electric conversion means; a signal processing means for computing the line width of line pattern according to the output signal from the A/D converter; and means for outputting the computed result.

Preferably the analogue-to-digital (A/D) converter is at least an 8-bit, and preferably a 10 bit or 12 bit, A/D converter so that the converter has a resolution of at least $2^8$.

Normally, the signal processing means comprises means for averaging the signals input thereto to provide an average signal for each photosensitive element and usually means are provided for detecting edges in the averaged signal information to determine the edges of the line being measured. Generally, the signal processing means comprises means for modifying the signals input thereto to take account of variations in the characteristics, for example sensitivity, of the individual photosensitive elements of the array.

In a preferred arrangement, the signal processing means comprises: a central processing unit (CPU); address designating means for designating addresses for data; memory means in which sensitivity information, image information and interim information are stored in addresses corresponding to individual elements of the one dimensional image sensor array; image element information compensation means for compensating or modifying the image element information to take account of the sensitivity information of each of the elements of the array; averaging means for averaging of the compensated image element information data; edge detecting means for cutting averaged compensated data at a predetermined level for thereby detecting the pattern edge from the corresponding address numbers; and line width computing means for computing the line width from the pattern edges.

Conveniently, the edge detecting means is arranged to detect edges where the level of the signal drops below a predetermined level.

Means may be provided for effecting relative movement between the array and a specimen on which the line whose width is to be measured is located. Usually, the array is moved and preferably the moving means comprises piezo-electric means and control means for enabling relative movement in units less than the inter-element pitch of the array. Alternatively, the moving means may be mechanical means comprising a wedge. Conveniently, the limit of movement is approximately one fifth of the distance between the photosensitive elements. In a preferred arrangement, the inter-element pitch is 15μm and the unit of movement is 3μm.

In a further aspect, the present invention provides a method of measuring the width of a line of a pattern on a specimen, the method comprising: projecting a magnified image of the line onto an array of photosensitive elements and processing signals output from the array to determine the width of the line.

Conveniently, the method further comprises converting analogue signals output from the photosensitive elements in parallel into series signals. The series signals may then be digitized.

In another aspect, the present invention provides a method for measuring individual line widths of lines forming a fine pattern, comprising the steps of: optically magnifying an image of the pattern to a predetermined magnification; impinging the magnified image onto a one dimensional image sensor array and developing therefrom serial output signals; converting the output signals into corresponding digitized signals; and computing the line width by processing the digitized signals.

Conveniently, the method further comprises modifying the signals from the array during processing to take account of variations in characteristics, for example sensitivity, between individual elements of the array.

In a preferred arrangement, the step of processing the signals includes averaging the signals from the array to provide an average signal for each element of the array. Conveniently, the signals from a predetermined number, in a preferred arrangement five, of adjacent photosensitive elements are averaged to provide an average signal for one of the predetermined number of elements. Usually, edges in the averaged signals are detected to detect edges of the line and this may be done by detecting an edge of a line by comparing the averaged signals to determine a predetermined level of difference between values corresponding to adjacent elements in the array.

Generally, the method further comprises effecting relative movement between the array and the specimen, preferably by moving the array. Usually, the smallest unit of distance by which the array can be moved is less than the inter-element pitch of the array. Normally, the movement is obtained by application of a piezo-electric force. Alternatively, movement may be obtained by application of a force exerted by a wedge.

Normally, an apparatus and/or method embodying the invention are used to measure the width of a line in an extremely fine pattern formed on a mask or wafer of the kind used in making integrated circuits.

In order that the invention may be more readily understood, an embodiment thereof will now be described, by way of example, with reference to the accompanying drawings, in which:

FIGURE 1 is a partially exploded shematic representation of previously proposed apparatus for measuring line width;

FIGURE 2 is an enlarged view of a portion of the apparatus of Figure 1;

FIGURE 3 is a block diagram of apparatus embodying this invention for measuring line width;

FIGURE 4 is a flow chart illustrating a signal processing scheme of the apparatus shown in Figure 3; and

FIGURE 5 illustrates various schematic graphs showing how signal processing is carried out in accordance with the flow chart shown in Figure 4.

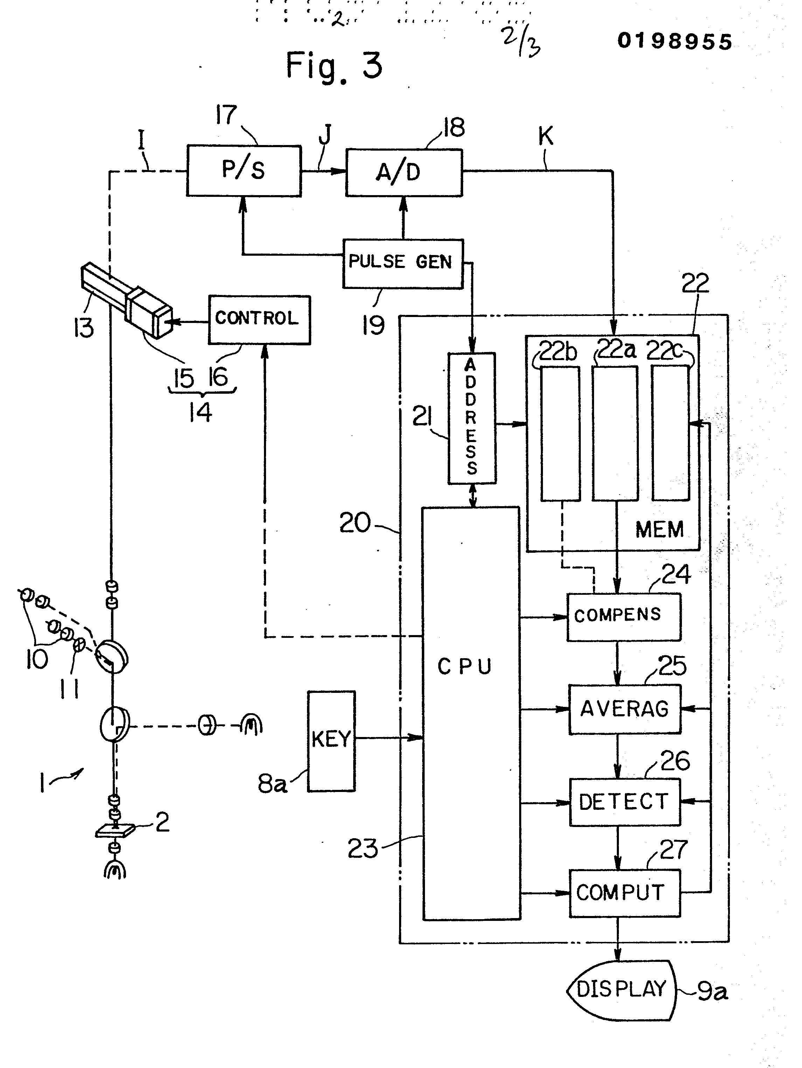

Referring to Figure 3, 13 is a one dimensional image sensor array composed of Charge Coupled Devices (CCD) arranged in the focal plane of a microscope 1. A moving or deviating means 14, composed of a piezoelectric element 15 and its control circuit 16, is provided for moving the one dimensional image sensor array along its axis. A parallel-to-series conversion circuit 17 (hereinafter called "P/S conversion circuit") is provided for receiving parallel electrical signals $I$ produced by photoelectric conversion by the array sensor 13 and for outputting, after amplification, series signals for supply to an analogue-to-digital (A/D) converter 18.   A/D converter 18 preferably has a resolution of, for example, 10 bits, and a timing pulse generator circuit 19 is provided for outputting a time signal to the P/S conversion circuit 17, A/D converter 18 and an address designating means 21 of a signal processing means 20 (to be further described later), respectively.   The aforesaid one dimensional image sensor array 13 is composed, for example, of 2,048 elements each of a size of 15 $\mu$m x 15 $\mu$m, and in this case it is possible to output photo-electric converted signals for an approximately 3 cm long projected image simultaneously.

Incidentally, if the magnification factor is 100, the length of the specimen 2 is approximately 0.3mm, hence an image element as small as 0.15 $\mu$m x 0.15 $\mu$m in size is recognizable or resolvable.

A one-dimensional image sensor array Photo Diode Array (PDA, hereinafter) can be used instead of the CCD array.

When the A/D converter 18 is a 10-bit A/D converter, the image signal J amplified by the P/S conversion circuit 17 and output serially is converted into digital signals K at 1,024 graduation signal levels.   Experimental data show that a good reproducibility is ensured when a 12-bit A/D converter is used even when the signal level is subdivided into 4,096 graduations.   Such digital signals K are written into respective ones of 2,043 different addresses in the image information memory sector of an internal memory 22 of the signal processing means with the aid of address designating means 21.

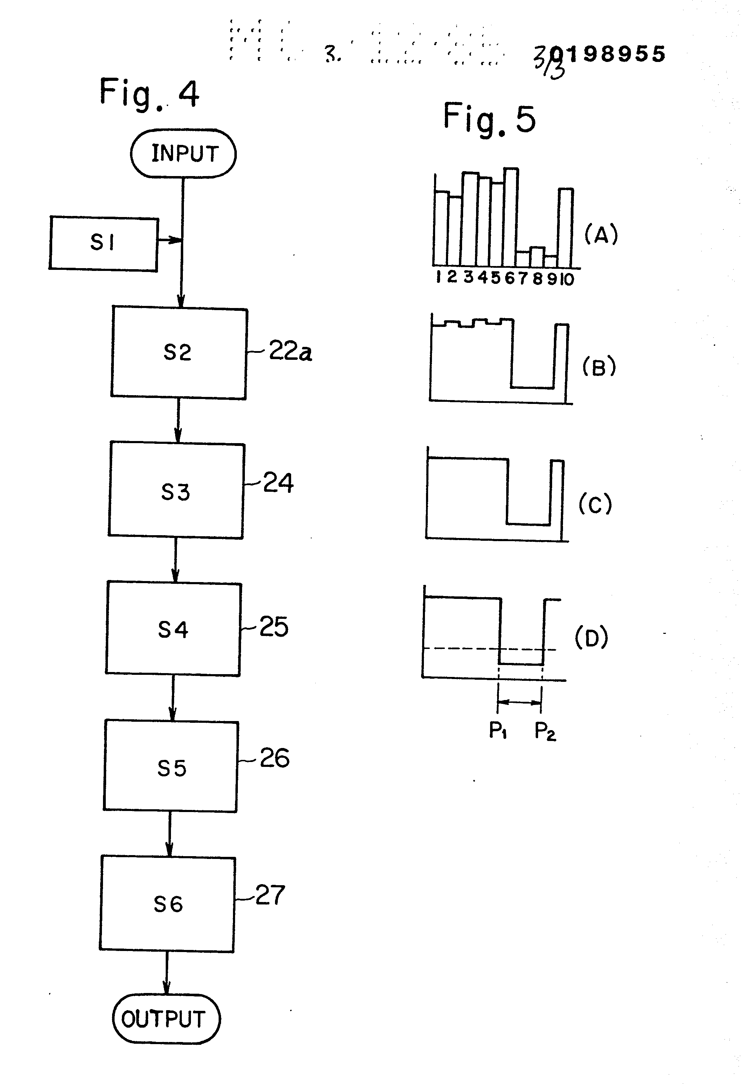

The signal processing means 20 is composed of a central processing unit (hereinafter called "CPU") 23, pattern edge detection means 26 and line width computing means 27, and these are so arranged that the line width of the pattern 12 is output to an output device 9a, which may be a display or printer etc. according to the flow chart of Figure 4.

In operation, it is necessary to compensate or modify the 2,048 pieces of image information stored in the image information memory sector 22a because the photo-electrically converted output from the one-dimensional image sensor array 13 is expected to have a variation with regard to the individual element's sensitivity of up to +/-10% and furthermore a slight dark current is caused even when an element of the array does not receive light. The intensity of the dark current $D_i$ ($i = 1....2,024$) and the sensitivity $S_i$ ($i = 1....2,024$) are prestored as sensitivity information in a sensitivity information memory sector 22b of the memory 22. Sensitivity information $D_i$ and $S_i$ are read out corresponding to each image information $X_i$ ($i = 1....2,024$), for compensation to be made by an image information compensating or modification means 24 according to, for example $X'_i = (X_i - D_i)/(S_i - D_i)$, where $X'_i$ is the modified image information, thereby to approximate the signal level of the digital image signal K as image information.

The compensated image information is statistically treated, e.g. by averaging by an averaging means 25 and/or by or edge detection by an edge detection circuit as will be described hereinafter for the line width to be computed thereafter. Such averaging or edge detection is well known to those skilled in the art. Here, with a given element as the centre one, two adjacent elements are taken from each side of the centre element and the signals from these five elements are averaged. The average value thus obtained is taken as the output value for the centre or given element, and this averaging process is preferably repeated, e.g. three times, for improved precision. Edge detection provides that, with the interim information data averaged (100% as maximum and 0% as minimum), data at a predetermined level detected e.g. at 35% is read out from the corresponding address as edge data.

The line width measuring apparatus is so arranged that the one dimensional image sensor array 13 can be moved within the inter-element pitch of the array using the moving means 14. The moving means 14 comprises, for instance, a piezo-electric element 15 connected to one end of the one dimensional image sensor array 13. The piezo-electric element 15 is controlled by the piezo-electric element control circuit 16 according to instructions from the signal processing means 20.

In the preferred embodiment, the voltage applied to the piezo- electric element 15 is in five alternative steps so that the length of the piezoelectric element 15 can be varied in units of 3 $\mu$m and the one dimensional image sensor array connected to one end of the piezo-electric element 15 can therefore be moved or deviated in units of 3$\mu$m. A photo-electric signal 1 to is supplied to the P/S conversion circuit 17 at each position of the sensor array. In this embodiment it is possible, for instance, to obtain image information at intervals of 3$\mu$m when the inter-element pitch of the array is 15$\mu$m, hence the resolution is five times higher than when the one dimensional image sensor array 13 is not moved. Thus, as mentioned above, even if the detectable size is 0.15$\mu$m per element, it is possible to detect image elements as small as 0.03$\mu$m.

It is possible to increase the magnification factor of the microscope or to decrease the unit extent of movement of the sensor array to make the detectable image element still smaller.

The graphs shown in Figure 5 show the amplitude of image signals at various stages in the processing of the digital signals output from the A/D converter 18 shown in Figure 5A.

The function of the line width measuring apparatus described above is described below, with reference to Figures 3, 4 and 5.

In a first step, $S_1$, the integrating time t for the one dimensional image sensor array 13 is preset. When the signal processing means 20 has been started by pushing a key 8a, the elements of one dimensional image sensor array 13 receive and accumulate simultaneously quantities of light from the projected image for the integrating time t. Then in a second step $S_2$, the image digital information K, for example the digital image information shown in Figure 5A, obtained via the P/S conversion circuit 17 and the A/D converter 18 is stored in the image information memory sector 22a. This image information K is approximated to the real value in the third step, $S_3$, by means of the image element information compensation means 24 as described above to a signal level as shown in Figure 5B. In a fourth step, $S_4$, the signal information is smoothed to obtain the averaged or smoothed signal information shown in Figure 5C by averaging means 25, and in a fifth step, $S_5$, edge points $P_1$ and $P_2$ of a line are detected by the edge detection circuit 26 which detects when the signal is below a certain amplitude or level to obtain the signal information shown in Figure 5D.

Although the edge points $P_1$ and $P_2$ shown in Figure 5D are determined by detecting the signal at the given signal level, shown in Figure 5D as a dashed line, it is also possible to determine the edge points by determining the maximum difference in output signal level between the adjacent image elements.

In a sixth step, $S_6$, the line width is computed by a line width computing means 27 on the basis of the edge points $P_1$ and $P_2$ and the resulting line width is displayed on the device 9a.

The image information K obtained by moving the one-dimensional image sensor array 13 several times (for instance a pitch of 15 $\mu$m divided into five units of 3 $\mu$m each) is stored by the aid of the address designating means 21 at the predetermined address in the image information memory sector 22a, and the edge points of other lines are detected in a like manner.

Although in this embodiment the moving means 14 is described as comprising a piezo-electric element 15 and its control circuit 16, the present invention is not limited to the use of such an arrangement and any suitable moving means may be used. Thus, it is possible in one alternative to move the one dimensional image sensor array by the use of a mechanical means such as a wedge.

In the preferred embodiment described above, an A/D converter having a resolution of, for example $2^{10}$, was used in order to obtain a digital signal of a resolution of more than $2^{10}$, but it is also possible to use an A/D converter having an ordinary resolution of $2^8$ and to obtain a digital signal of a resolution of more than $2^{10}$ by one of the known data processing methods.

Thus, in the apparatus described the actual pattern serves as the object for a magnifying optical system which projects the pattern onto a photo-electric conversion means which is composed of one dimensional image sensor array, the output signals from which are amplified and output serially. The serial analogue signals are converted by an A/D converter. The analogue-to-digital conversion may be performed by an A/D converter having a resolution of more than $2^{10}$ and variations in sensitivity between the elements constituting the one dimensional image sensor are stored in memory beforehand so that the digital signal can be modified to take account of such variations.

The output signal from the one dimensional image sensor array is taken out serially through a parallel-to-series converter to produce serial signals which are converted by a A/D converter into digital signals to be processed for statistical computation so that the image signal corresponding to the required line width on the specimen can be obtained quickly. Particularly, when conversion of the sensor array's output into a digital signal is done by the use of an A/D conversion means having a resolution of more than $2^{10}$, it is possible to discriminate in the image signal levels of up to approximately 1,000 graduations. Moreover, when the apparatus is so arranged that the variation between the constituent elements of the one dimensional image sensor array are taken into account by the signal processing means, e.g. a computer, before statistical computation is made thereof, it is possible to secure a broad dynamic range by the use of the one dimensional image sensor array. Further, when the one dimensional image sensor array is movable by the use of a moving means as previously mentioned, image information may be obtained at subdivided positions of the inter-element pitch of the array, hence the amount of pattern edge information becomes ample and allows a still more accurate detection of the pattern edges. By the use of a one dimensional image sensor array instead of a photo-electric multiplier tube, an ample dynamic range and ample signal-to-noise (S/N) ratio can be obtained. Also, the apparatus is accurate, allowing very precise measurement, simple and inexpensive to produce and/or operate.

The apparatus and method described above, may provide numerous advantages over the prior art, as follows:

a. Since a one-dimensional image sensor array is used as a photo-electric conversion means and the image information for a given width on the specimen therefore is easily accessible, it is possible significantly to shorten the time required for measuring a line width.

b. Unlike the prior art the apparatus does not need to use a combination of photoelectric means and slit-driving means, or a scanning optical system for scanning with a laser beam, hence the present apparatus is simpler in construction, has higher productivity, and is much less expensive.

c. Also, with the present apparatus it is not necessary to adjust any slit width. Hence scattering of the measuring precision can be precluded, when arrangement is made for approximating the image signal level to the true value through compensation for elimination of scattering with regard to inter-element sensitivity, scattering caused by dark current and also scattering with regard to photo-intensity distribution.

d. Especially when a moving or deviating means is provided for minutely deviating the one dimensional image sensor array within the inter-element pitch of the array, the resolution of the apparatus described above can be correspondingly increased, hence the line width of a given pattern can be measured with an improved precision.

The features disclosed in the foregoing description, in the following claims and/or the accompanying drawings may, both separately and in any combination thereof, be material for realising the invention in diverse forms thereof.

CLAIMS

1. Apparatus for measuring the width of a line on a pattern on a specimen, the apparatus comprising: photosensitive means comprising an array of photosensitive elements for each providing a signal representing light received thereby; means for projecting a magnified image of a line on a specimen onto the array; and means for processing signals output by the photosensitive elements of the array to determine the width of the line.

2. Apparatus according to Claim 1, wherein the photosensitive means further comprises a parallel-to-serial converter for converting signals output in parallel by the photosensitive means into series signals.

3. Apparatus according to Claim 1 or 2, wherein the photosensitive means outputs analogue signals and an analogue-to-digital converter is provided for converting the analogue signals into digital signals for supply to the signal processing means.

4. Apparatus according to Claim 1, 2 or 3, wherein the signal processing means comprises means for averaging the signals input thereto to provide an average signal for each photosensitive element and means for detecting edges in the averaged signal information to determine the edges of the line being measured.

5. Apparatus according to Claim 1, 2, 3 or 4, wherein the signal processing means comprises means for modifying the signals input thereto to take account of variations in the characteristics, for example sensitivity, of the individual photosensitive elements of the array.

6. Apparatus according to any preceding claim, wherein means are provided for effecting relative movement between the array and a specimen on which the line whose width is to be measured is located.

7. Apparatus according to Claim 6, wherein the means for effecting relative movement comprises piezo-electric means and control means for enabling relative movement in units less than the inter-element pitch of the array.

0198955

8. A method of measuring the width of a line of a pattern on a specimen, the method comprising: projecting a magnified image of the line onto an array of photosensitive elements and processing signals output from the array to determine the width of the line.

9. A method according to Claim 8, further comprising converting analogue signals output from the photosensitive elements in parallel into series signals and digitizing the analogue signals.

10. A method according to Claim 8 or 9, further comprising modifying the signals from the array during processing to take account of variations in characteristics, for example sensitivity, between individual elements of the array.

11. A method according to any one of claims 8 to 10, wherein the step of processing the signals includes averaging the signals from the array to provide an average signal for each element of the array and detecting edges in the averaged signal information to detect the edges of the line.

12. A method according to any one of claims 8 to 11, further comprising effecting relative movement between the array and the specimen.

# Fig. 1
(Prior Art)

CONV

# Fig. 2 (Prior Art)

## Fig. 3

# Fig. 4

INPUT

S1

S2 — 22a

S3 — 24

S4 — 25

S5 — 26

S6 — 27

OUTPUT

# Fig. 5

(A)

1 2 3 4 5 6 7 8 9 10

(B)

(C)

(D)

P₁  P₂

0198955

. Application number

**European Patent Office**

**EUROPEAN SEARCH REPORT**

## DOCUMENTS CONSIDERED TO BE RELEVANT

EP 85115615.8

| Category | Citation of document with indication, where appropriate, of relevant passages | Relevant to claim | CLASSIFICATION OF THE APPLICATION (Int. Cl.4) |
|---|---|---|---|
| X | DE - B - 2 211 235 (SIEMENS) <br> * Totality * | 1-5,8-11 | G 01 B 9/04 |
| Y | | 6,12 | |
| Y | US - A - 4 373 817 (COATES) <br> * Totality * | 1-6,8-12 | |
| X | DE - A1 - 2 458 807 (IBM) <br> * Totality * | 1-4,8-11 | |
| X | GB - A - 2 144 536 (NANOMETRICS) <br> * Totality * | 1-4,8-11 | |

TECHNICAL FIELDS SEARCHED (Int. Cl.4)

G 01 B 9/00
G 01 B 11/00
G 02 B 21/00

The present search report has been drawn up for all claims

| Place of search | Date of completion of the search | Examiner |
|---|---|---|
| VIENNA | 23-07-1986 | TOMASELLI |